# EUROPÄISCHE PATENTANMELDUNG

(11) **EP 0 775 789 A1**
(43) Veröffentlichungstag der Anmeldung: **28.05.1997**
(21) Anmeldenummer: 96117130.3
(22) Anmeldetag: 25.10.1996
(51) Int. Cl.: E04C 2/54, B32B 17/10

(54) **Glasbauelement aus einer Mehrscheibenverbundeinheit mit einer Stirnseiten-Schutzmassnahme**

(30) Priorität: 15.11.1995 DE 29518081 U
(71) Anmelder: FLACHGLAS AKTIENGESELLSCHAFT, 90766 Fürth (DE)
(72) Erfinder: Hanck, Giso, 44866 Bochum (DE)
(74) Vertreter: Honke, Manfred, Dr.-Ing.

(57) **Zusammenfassung**

Glasbauelement aus einer Mehrscheibenverbundeinheit mit einer Stirnseiten-Schutzmaßnahme. Die Mehrscheibenverbundeinheit besteht aus zumindest drei Glasscheiben (2), zwischen denen eine Verbundfolie (5) angeordnet ist. Zumindest eine der in der Mehrscheibenverbundeinheit inneliegenden Glasscheiben ist kleiner als die außenliegenden und bildet in zumindest einer Stirnseite eine Fuge (4). Im Bereich der Fuge sind die Verbundfolien bis zu den außenliegenden Rändern der Fuge fortgeführt. In die Fuge ist zumindest ein Füllprofil (6) eingesetzt. An das Füllprofil ist eine Schutzleiste (7) angeschlossen. Die Schutzleiste ist stoffschlüssig oder formschlüssig mit dem Füllprofil verbunden.

## Beschreibung

Die Erfindung betrifft ein Glasbauelement aus einer Mehrscheibenverbundeinheit mit einer Stirnseiten-Schutzmaßnahme. - Glasbauelement bezeichnet im Rahmen der Erfindung Mehrscheibenverbundglasscheiben, die für die verschiedensten Zwecke eingesetzt werden, beispielsweise als Glasscheiben in Vitrinen, in Aquarien, in Treppengeländern und als Treppenstufen, als Trennwände in Wohnräumen und Gehegen, als Dachelemente, Vordachelemente und dergleichen. Solche Glasbauelemente können insbesondere im Gebrauch und im eingebauten Zustand an den Kanten leicht beschädigt werden. Das stört aus ästhetischen Gründen. Insbesondere kerbenförmige Beschädigungen beeinträchtigen die Standzeit. - Kante bezeichnet hier und im Rahmen der Erfindung die Schnittlinie zweier aneinander stoßender Begrenzungsflächen. Die Stirnseiten verbinden bei den Mehrscheibenverbundeinheiten, mit denen sich die Erfindung beschäftigt, zwei äußere Kanten an den Glasscheiben.

Die bekannten Glasbauelemente des beschriebenen Aufbaues und der beschriebenen Zweckbestimmung, von denen die Erfindung ausgeht, sind mit Stirnseiten-Schutzeinrichtungen, die besondere Bauteile darstellen, entsprechend ausgebildet und entsprechend wirksam sind, nicht versehen. Um Beschädigungen der Kanten zu verhindern, werden Stirnseiten-Schutzmaßnahmen anderer Art verwirklicht, es werden nämlich die Kanten gebrochen oder verrundet. Das ist aufwendig und wenig wirksam.

Der Erfindung liegt das technische Problem zugrunde, ein Glasbauelement des eingangs beschriebenen Aufbaues und der beschriebenen Zweckbestimmung so auszubilden, daß störende Kantenbeschädigungen bei bestimmungsgemäßen Gebrauch praktisch nicht mehr auftreten können.

Zur Lösung dieses technischen Problems ist Gegenstand der Erfindung ein Glasbauelement aus einer Mehrscheibenverbundeinheit mit einer Stirnseiten-Schutzmaßnahme mit den Merkmalen
1.1) die Mehrscheibenverbundeinheit besteht aus zumindest drei Glasscheiben, zwischen denen eine Verbundfolie angeordnet ist,
1.2) zumindest eine der in der Mehrscheibenverbundeinheit innenliegenden Glasscheiben ist kleiner als die außenliegenden und bildet in zumindest einer Stirnseite eine Fuge,
1.3) im Bereich der Fuge sind die Verbundfolien bis zu den außenliegenden Rändern der Fuge fortgeführt,
1.4) in die Fuge ist zumindest ein Füllprofil eingesetzt, welches in der Fuge gehalten ist,
1.5) an das Füllprofil ist eine Schutzleiste angeschlossen, welche die fugenführende Stirnseite abdeckt,
wobei die Schutzleiste stoffschlüssig oder formschlüssig mit dem Füllprofil verbunden ist. - Die Schutzleiste kann so gestaltet sein, daß sie auch die Kanten an der Stirnseite der Mehrscheibenverbundeinheit abdeckt. Nach bevorzugter Ausführungsform der Erfindung sind die Verbundfolien bis an den Rand der Fuge geführt und ist das Füllprofil an den Verbundfolien gehalten. Von dieser Maßnahme kann man aber auch absehen, wenn das Füllprofil mit einer Klebschicht versehen ist.

Die Erfindung geht von der Erkenntnis aus, daß die ohnehin vorhandene Struktur von Glasbauelementen aus einer Mehrscheibenverbundeinheit es erlaubt, ohne großen Aufwand einen Stirnseitenschutz zu verwirklichen, der die ohnehin vorhandene Struktur der Glasbauelemente ausnutzt, sehr wirksam ist und im Zuge einer industriellen Massenfertigung leicht angebracht werden kann.

Im Zusammenhang mit anderen technischen Problemen als dem der Erfindung zugrunde liegenden technischen Problem ist es bei Mehrscheibenisolierglaseinheiten mit z. B. gasgefülltem Zwischenraum zwischen einer Außenscheibe und einer Innenscheibe bekannt, an den Abstandshalterrahmen Bauteile anzuschließen, die eine Befestigungsfunktion erfüllen. Diese Bauteile ermöglichen es, ohne Wärmebrücken und ohne zusätzliche Rahmen lediglich durch einfache mechanische Befestigungselemente, wie z. B. Schrauben oder Laschen, sowohl Mehrscheibenisolierglaseinheiten direkt an Tragkonstruktionen zu befestigen als auch Befestigungselemente anzuschrauben. Dieser Stand der Technik hat die Weiterentwicklung von Glasbauelementen des eingangs beschriebenen Aufbaus und der eingangs beschriebenen Zweckbestimmung in bezug auf den Stirnseitenschutz nicht beeinflußt.

Im einzelnen bestehen im Rahmen der Erfindung mehrere Möglichkeiten der weiteren Ausbildung und Gestaltung. So weist nach bevorzugter Ausführungsform der Erfindung die Mehrscheibenverbundeinheit drei Glasscheiben auf und bildet die mittlere Glasscheibe die Fuge. Das Füllprofil kann bei einem erfindungsgemäßen Glasbauelement über die Länge der Fuge und damit der Stirnseite durchlaufen. Es besteht aber auch die Möglichkeit, mehrere Füllprofile, genauer gesagt Füllprofilabschnitte, in der Fuge mit Abstandszwischenraum anzuordnen und an jedem dieser Füllprofile die Schutzleiste zu befestigen. Die Schutzleiste kann an das Füllprofil bzw. an die Füllprofile angeformt und dadurch stoffschlüssig mit dem Füllprofil bzw. den Füllprofilen verbunden sein. Es besteht aber auch die Möglichkeit, die Schutzleiste mit Schraubenverbindungen an das Füllprofil bzw. die Füllprofile formschlüssig anzuschließen.

Ein erfindungsgemäßes Glasbauelement besitzt zumindest an einer Stirnseite, wie beschrieben, eine Schutzleiste. Die Schutzleiste kann aber auch an allen Stirnseiten angeordnet sein. Die Schutzleiste und/oder das Füllprofil bestehen z. B. aus Metall. Die Schutzleiste und/oder das Füllprofil können aber auch aus Kunststoff geformt sein.

Bei dem erfindungsgemäßen Glasbauelement wird die beschriebene Fuge im Rahmen der Fertigung der Mehrscheibenverbundeinheit ausgespart, was ohne erheblichen zusätzlichen Fertigungsaufwand geschehen kann. Im übrigen kann die Anordnung so getroffen sein, daß das Füllprofil bzw. die Füllprofile Formschlußelemente aufweisen und daß diese in die Verbundfolie einfassen sowie bei der Herstellung der Mehrscheibenverbundeinheit in der Fuge festgesetzt werden, weil die Formschlußelemente in die Verbundfolien eindringen. Nach einem anderen Vorschlag der Erfindung sind das Füllprofil bzw. die Füllprofile mit Spreizelementen in der Fuge gehalten und greifen die Spreizelemente in die Verbundfolien ein. Sie können beispielsweise über eine Schraube betätigt werden.

Im folgenden wird die Erfindung anhand einer lediglich ein Ausführungsbeispiel darstellenden Zeichnung ausführlicher erläutert. Es zeigen in schematischer Darstellung
- Fig. 1: einen Schnitt durch ein erfindungsgemäßes Glasbauelement, ausschnittsweise vor dem Zusammenbau,
- Fig. 2: den Gegenstand nach Fig. 1 zusammengebaut und
- Fig. 3: eine andere Ausführungsform des Gegenstandes der Fig. 2.

Das in den Figuren ausschnittsweise dargestellte Glasbauelement 1, besteht aus einer Mehrscheibenverbundeinheit, wobei Stirnseiten-Schutzmaßnahmen verwirklicht sind.

Die Mehrscheibenverbundeinheit besteht im Ausführungsbeispiel und nach bevorzugter Ausführungsform der Erfindung aus drei Glasscheiben 2. Die mittlere Glasscheibe ist kleiner als die außenliegenden und bildet in der gezeigten Stirnseite 3 eine Fuge 4. Im Ausführungsbeispiel, aber ohne Beschränkung, sind die Verbundfolien 5 im Bereich der Fuge 4 bis zu den außenliegenden Rändern der Fuge 4 geführt. In die Fuge 4 ist ein Füllprofil 6 eingesetzt, welches von den Verbundfolien 5 gehalten ist. An das Füllprofil 6 ist eine Schutzleiste 7 angeschlossen, welche die fugenführende Stirnseite 3 abdeckt. Das Füllprofil kann mit einem T-förmigen Profilquerschnitt versehen sein, wobei der T-Flansch die Schutzleiste bildet.

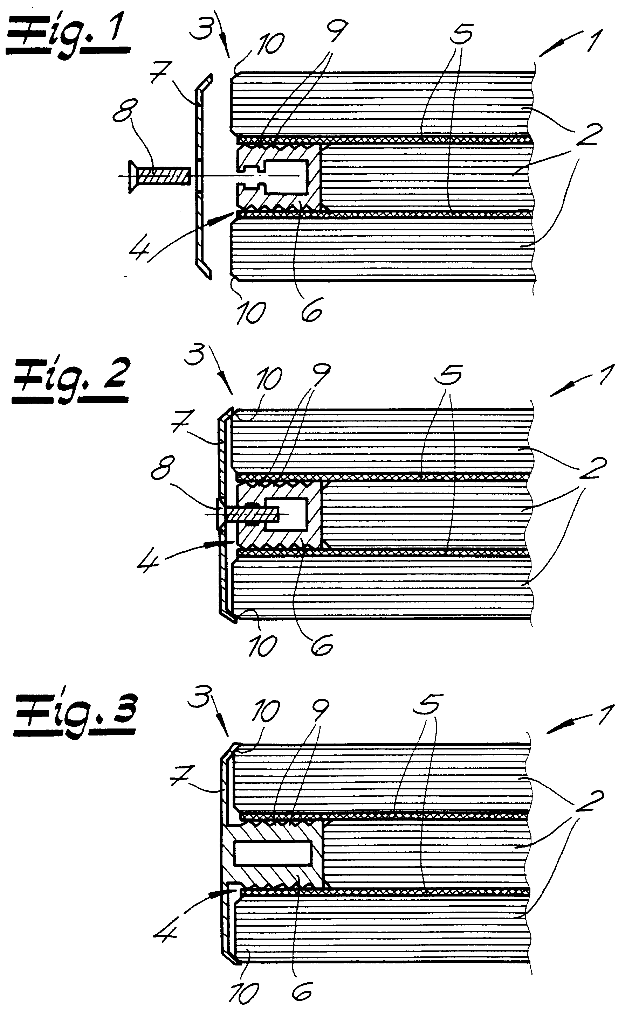

Bei der Ausführungsform nach den Fig. 1 und 2 ist die Schutzleiste 7 formschlüssig mit dem Füllprofil 6 verbunden, und zwar mit Hilfe von Schrauben 8, die durch eine Bohrung in der Schutzleiste 7 in das Füllprofil 6 eingeschraubt werden. Die Fig. 1 zeigt den Zustand vor dem Zusammenschrauben, Fig. 2 zeigt den montierten Zustand.

Bei der Ausführungsform nach Fig. 3 ist die Schutzleiste 7 stoffschlüssig mit dem Füllprofil 6 verbunden, nämlich an das Füllprofil 6 angeformt. Das Füllprofil 6 besitzt im Ausführungsbeispiel Formschlußelemente 9, die in die Verbundfolien 5 einfassen, so daß das Füllprofil 6 sicher gehalten ist. Man erkennt, daß man unschwer auch mit mehreren Füllprofilabschnitten arbeiten könnte. Die Schutzleiste 7 ist in allen Fällen so breit ausgeführt, daß sie auch die Kanten 10 der außenliegenden Glasscheiben 2 abdeckt.

## Patentansprüche

1. Glasbauelement aus einer Mehrscheibenverbundeinheit mit einer Stirnseiten-Schutzmaßnahme mit den Merkmalen
1.1) die Mehrscheibenverbundeinheit besteht aus Zumindest drei Glasscheiben, zwischen denen eine Verbundfolie angeordnet ist,
1.2) zumindest eine der in der Mehrscheibenverbundeinheit innenliegenden Glasscheiben ist kleiner als die außenliegenden und bildet in zumindest einer Stirnseite eine Fuge,
1.3) im Bereich der Fuge sind die Verbundfolien bis zu den außenliegenden Rändern der Fuge fortgeführt,
1.4) in die Fuge ist zumindest ein Füllprofil eingesetzt, welches in der Fuge gehalten ist,
1.5) an das Füllprofil ist eine Schutzleiste angeschlossen, welche die fugenfuhrende Stirnseite abdeckt,
wobei die Schutzleiste stoffschlüssig oder formschlüssig mit dem Füllprofil verbunden ist.

2. Glasbauelement nach Anspruch 1, wobei die Verbundfolien bis an den Rand der Fuge geführt sind und das Füllprofil von den Verbundfolien gehalten ist.

3. Glasbauelement nach einem der Ansprüche 1 oder 2, wobei die Mehrscheibenverbundeinheit drei Glasscheiben aufweist und die mittlere Glasscheibe die Fuge bildet.

4. Glasbauelement nach einem der Ansprüche 1 bis 3, wobei das Füllprofil über die Länge der Fuge und damit der Stirnseite durchläuft.

5. Glasbauelement nach einem der Ansprüche 1 bis 3, wobei mehrere Füllprofile in der Fuge mit Abstandszwischenraum angeordnet sind und an jedes die Schutzleiste angeschlossen ist.

6. Glasbauelement nach einem der Ansprüche 1 bis 5, wobei die Schutzleiste an das Füllprofil bzw. an die Füllprofile stoffschlüssig angeformt ist.

7. Glasbauelement nach einem der Ansprüche 1 bis 5, wobei die Schutzleiste mit Schraubverbindungen an das Füllprofil bzw. die Füllprofile formschlüssig angeschlossen ist.

8. Glasbauelement nach einem der Ansprüche 1 bis 7, wobei die Schutzleiste an allen Stirnseiten angeordnet ist.

9. Glasbauelement nach einem der Ansprüche 1 bis 8, wobei die Schutzleiste und/oder das Füllprofil aus Metall geformt sind.

10. Glasbauelement nach einem der Ansprüche 1 bis 8, wobei die Schutzleiste und/oder das Füllprofil aus Kunststoff geformt sind.

11. Glasbauelement nach einem der Ansprüche 1 bis 10, wobei das Füllprofil bzw. die Füllprofile Formschlußelemente aufweist bzw. aufweisen und diese in die Verbundfolien einfassen sowie bei der Herstellung der Mehrscheibenverbundeinheit in die Fuge eingesetzt worden ist bzw. eingesetzt worden sind.

12. Glasbauelement nach einem der Ansprüche 1 bis 10, wobei das Füllprofil bzw. die Füllprofile mit Spreizelementen in der Fuge gehalten ist bzw. gehalten sind und die Spreizelemente in die Verbundfolien einfassen.
